# FASCICULE DE BREVET EUROPEEN

(11) **EP 4 543 617 B1**
(45) Date de publication et mention de la délivrance du brevet: **22.04.2026**
(21) Numéro de dépôt: 23730387.0
(22) Date de dépôt: 26.05.2023
(51) Int. Cl.: B23K 26/04, G01N 21/17, G02B 27/09, G02B 26/10, G02B 26/12, B23K 26/073, B23K 26/082, B23K 26/352, B23K 26/36, B23K 26/06

(54) **DISPOSITIF OPTIQUE DE BALAYAGE D'UN FAISCEAU LUMINEUX SUR UNE PIÈCE À USINER**
OPTISCHE VORRICHTUNG ZUM ABTASTEN EINES LICHTSTRAHLS ÜBER EIN ZU BEARBEITENDES WERKSTÜCK
OPTICAL DEVICE FOR SCANNING A LIGHT BEAM OVER A PART TO BE MACHINED

(30) Priorité: 27.06.2022 FR 2206381
(43) Date de publication de la demande: 30.04.2025
(73) Titulaire: Cailabs, 35000 Rennes (FR)
(72) Inventeur: KUMAR, Avinash, 35000 Rennes (FR)
(74) Mandataire: IP Trust
(86) Numéro de dépôt international: PCT/EP2023/064250
(87) Numéro de publication internationale: WO 2024/002600

(56) Documents cités:
- US-A1- 2014 240 795
- US-A1- 2018 284 271
- US-A1- 2019 310 368
- US-A1- 2021 199 773
- US-A1- 2022 113 536

## Description

### DOMAINE DE L'INVENTION

L'invention concerne un dispositif optique de balayage d'un faisceau lumineux sur une surface d'une pièce. Un tel dispositif trouve notamment son application dans le domaine de la mise en forme d'un faisceau lumineux, par exemple un faisceau laser de forte puissance destiné à l'usinage, au soudage, au brasage et plus généralement à tout traitement des matériaux. Dans un tel cas d'utilisation, la surface de la pièce présente des motifs sur lesquels le faisceau lumineux peut être sélectivement projeté afin de modifier, de manière contrôlée, la forme du faisceau lumineux réfléchi ou transmis. Les mêmes principes peuvent être utilisés pour modifier d'autres paramètres du faisceau lumineux, par exemple son contenu spectral. D'autres domaines peuvent également bénéficier de l'invention, par exemple le domaine de la microscopie ou de la mesure dans lequel la surface à balayer est celle d'un échantillon à inspecter.

US2016368089A1 divulgue une tête d'un équipement de soudage par faisceau laser. La tête peut comprendre un élément optique diffractif disposé dans le trajet de propagation du faisceau, l'élément optique diffractif étant conçu pour façonner le faisceau. L'élément optique diffractif est positionné de manière amovible dans la tête de l'équipement. Ainsi, l'élément optique diffractif peut être sélectionné pour produire un faisceau de forme et/ou de taille désirée. Le document propose de mettre en forme le faisceau et de lui donner, selon les besoins, un profil en "top hat", rectangulaire ou annulaire. Cette approche est restrictive car elle nécessite d'intervenir sur l'équipement pour remplacer l'élément optique diffractif lorsqu'on souhaite modifier la forme du faisceau. Il n'est donc pas possible de modifier instantanément la forme du faisceau lors de l'étape de soudure.

L'article "Adjustable-Function Beam Shaping Methods" d'Alexander Brodsky, Natan Kaplan, Stefan Liebl et Rainer Franke dans Photonic Views (2019), (https://doi.org/10. 1002/phvs.201900015) propose d'exploiter un élément optique diffractif avec une pluralité de motifs. En déplaçant le faisceau et l'élément optique l'un par rapport à l'autre ou en modifiant la taille du faisceau, il est possible de choisir les proportions relatives du faisceau se projetant dans les différents motifs. La forme du faisceau peut ainsi être contrôlée en continu.

L'art antérieur est représenté par le document US 2022/113536 A1.

De nombreux agencements sont possibles pour assurer le déplacement du faisceau et de l'élément optique diffractif l'un par rapport à l'autre. En particulier, on peut envisager un agencement permettant de balayer de manière contrôlée le faisceau sur la surface de l'élément optique diffractif. Cependant, pour être utilisables, ces dispositifs doivent répondre à des exigences de fonctionnement très spécifiques. Tout d'abord, le déplacement doit être extrêmement rapide et parfaitement contrôlable. Le faisceau mis en forme doit être séparé spatialement du faisceau d'origine, et il doit occuper une position et une orientation fixes, c'est pourquoi le simple balayage du faisceau avec un miroir orientable sur l'élément optique diffractif ne convient pas. Pour des raisons de compacité, de pertes optiques, de complexité d'alignement, de coûts et de gestion thermique (notamment dans les applications impliquant un faisceau de forte puissance), le nombre de pièces optiques, notamment de pièces optiques mobiles telles que des miroirs orientables ou des lentilles mobiles, est de préférence limité.

### OBJET DE L'INVENTION

Un objet de l'invention est de proposer un dispositif optique de balayage d'un faisceau lumineux sur une surface d'une pièce qui répond, au moins en partie, à ces exigences.

### DESCRIPTION DESCRIPTION DE L'INVENTION

En vue d'atteindre ce but, l'objet de l'invention propose un dispositif optique de balayage d'un faisceau lumineux, dit "faisceau de balayage", sur une surface d'une pièce à balayer disposée dans le dispositif, le faisceau lumineux réfléchi ou transmis par la pièce, dit "faisceau transformé", étant guidé vers une position fixe et selon une orientation fixe par rapport au dispositif optique et définissant un faisceau lumineux dit "faisceau de sortie" du dispositif, le dispositif comprenant :
- un déflecteur ayant un axe de pivotement et configuré pour produire un faisceau dévié selon un angle choisi, le faisceau dévié restant contenu dans un premier plan principal, le déflecteur recevant également le faisceau transformé, le faisceau transformé restant contenu dans un deuxième plan principal, différent du premier plan principal, pour produire le faisceau de sortie ;
- une première optique de focalisation ayant un premier axe optique parallèle au premier plan principal, la première optique de focalisation étant optiquement disposée entre le déflecteur et la pièce, recevant le faisceau dévié et produisant le faisceau de balayage ;
- une seconde optique de focalisation ayant un second axe optique parallèle au second plan principal, la seconde optique de focalisation étant optiquement disposée entre la pièce et le déflecteur ;
- au moins une optique de réflexion disposée dans le dispositif pour guider le faisceau de balayage de la première optique de focalisation à la seconde optique de focalisation.

Selon d'autres caractéristiques avantageuses et non limitatives de l'invention, pris seuls ou dans toute combinaison techniquement réalisable :
- la première optique de focalisation présente une première longueur focale et la seconde optique de focalisation présente une seconde longueur focale identique à la première longueur focale ;
- la première optique de focalisation et la seconde optique de focalisation sont séparées de l'axe de pivotement du déflecteur par une distance, mesurée le long de leur axe optique, comprise entre +/-10% de leur longueur focale, de préférence entre +/-5% de leur longueur focale ;
- le déflecteur est contrôlé pour limiter l'angle de déviation à une plage de +/-25° ;
- la longueur optique entre la première optique de focalisation et la seconde optique de focalisation est comprise entre la moitié de la moyenne de la première longueur focale et de la seconde longueur focale et entre quatre fois la moyenne de la première longueur focale et de la seconde longueur focale ;
- le déflecteur consiste en un dispositif choisi dans la liste formée par : un miroir oscillant, un miroir polygonal rotatif, un miroir tournant, un déflecteur électro-optique ou en un déflecteur à cristaux liquides ;
- le premier plan principal et le second plan principal ne sont pas parallèles l'un à l'autre et le faisceau dévié et le faisceau transformé se chevauchent sur le déflecteur ;
- la première optique de focalisation (4a) et la seconde optique de focalisation (4b) sont formées de miroirs paraboliques hors axe ;
- l'au moins une optique réfléchissante est formée d'un miroir plan et fixe ;
- le premier plan principal et le second plan principal sont parallèles l'un à l'autre ; la première optique de focalisation et la seconde optique de focalisation sont constituées d'une seule pièce d'optique de focalisation ; et la pièce d'optique réfléchissante est formée d'un coin réfléchissant pour guider le faisceau de balayage contenu dans le premier plan principal afin qu'il se propage dans le second plan principal ;
- l'optique unique de focalisation est constituée d'une lentille cylindrique ;
- la pièce est configurée pour modifier la forme du faisceau de sortie en fonction de l'angle de déviation du faisceau dévié ;
- la pièce présente un motif de diffraction ;
- la figure de diffraction varie de façon continue ou discontinue ;
- la pièce comprend une pluralité de plaques de phase ;
- la pièce comprend une pièce optique de forme libre.

### BRÈVE DESCRIPTION DES FIGURES

D'autres caractéristiques et avantages de l'invention ressortiront de la description détaillée suivante de l'invention en référence aux figures annexées sur lesquelles :
[Fig.1a]
[Fig.1b]

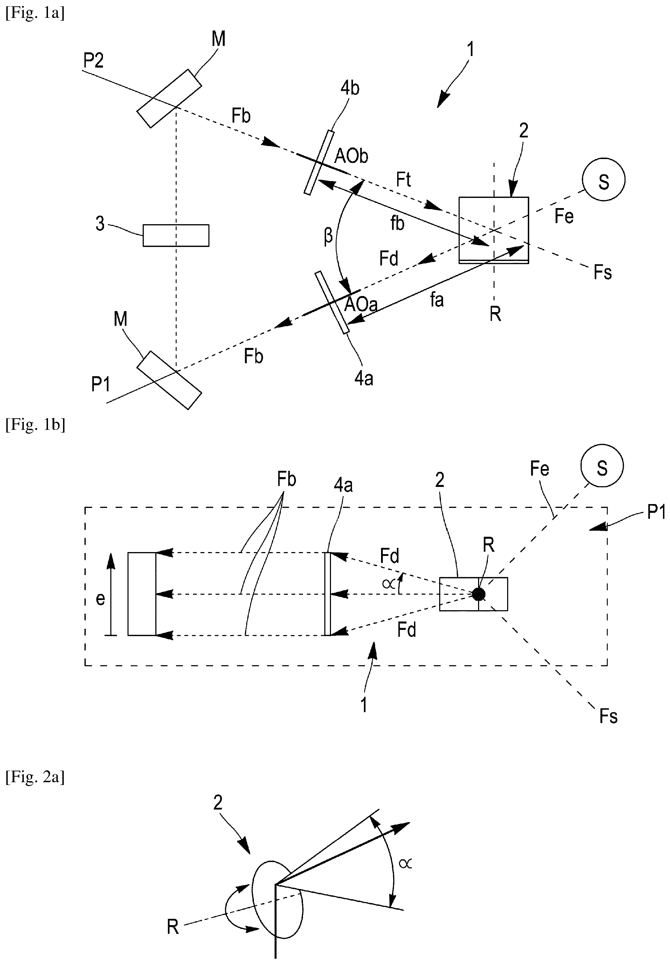

   Les figures 1a et 1b illustrent les principes de l'invention en montrant une vue de dessus et une vue de côté d'un dispositif de balayage, respectivement ;
[Fig.2a]
[Fig.2b]
[Fig.2c]

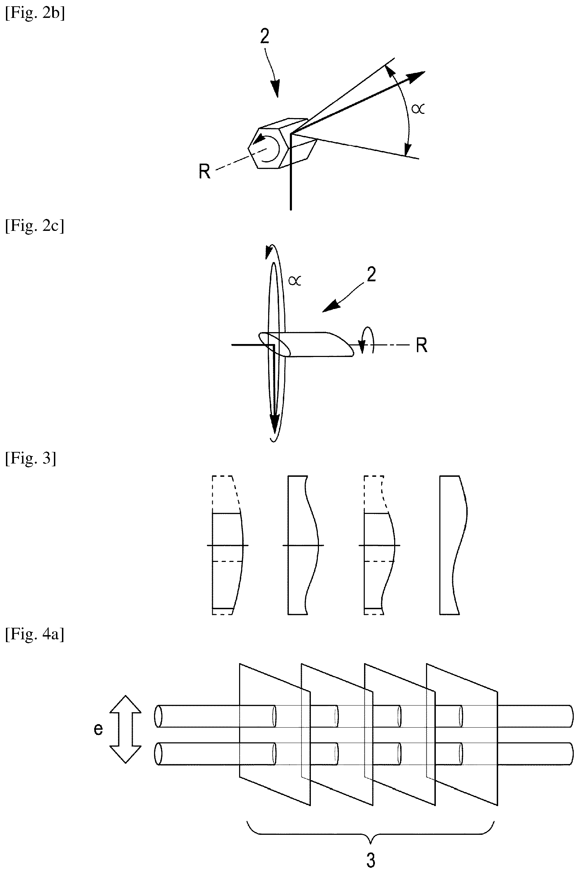

   Les figures 2a, 2b, 2c montrent différents modes de réalisation d'un déflecteur d'un dispositif de balayage selon l'invention ;
[Fig.3]
   Les figures 3 illustrent des optiques de forme libre qui peuvent être utilisées dans un dispositif de balayage selon l'invention.
[Fig.4a]
   La [Fig.4a] représente une pièce comprenant une pluralité de pièces optiques ;
[Fig.4b]

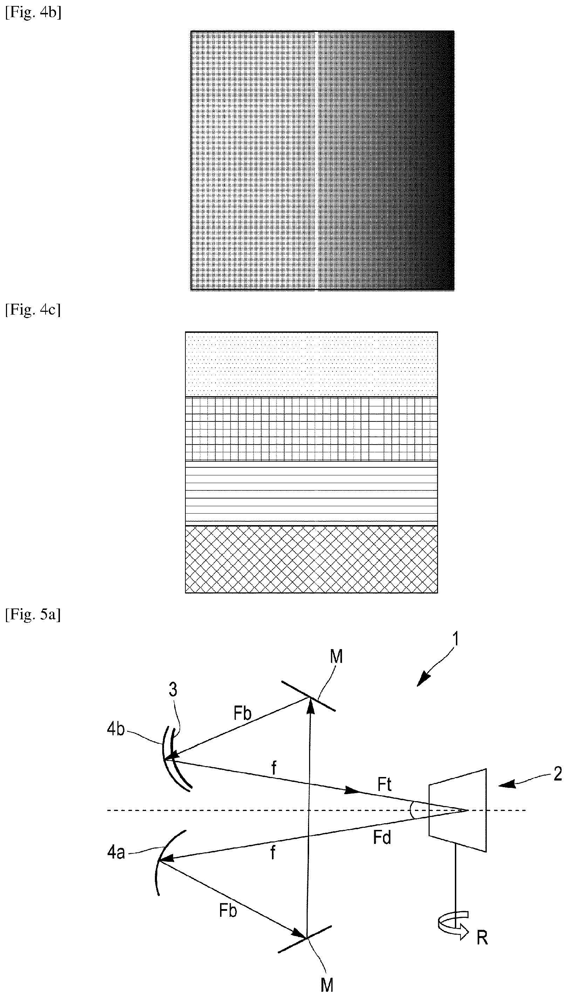

   La [Fig.4b] représente une pièce comprenant un élément optique diffractif présentant un motif de diffraction continu ;
[Fig.4c]
   La [Fig.4c] représente une pièce comprenant un élément optique diffractif présentant un motif de diffraction discontinu ;
[Fig.5a]
[Fig.5b]

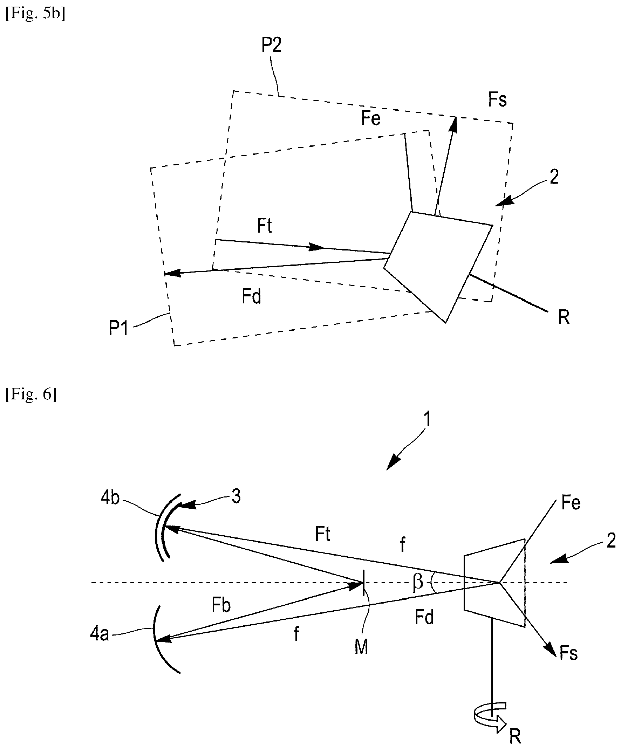

   Les figures 5a et 5b illustrent un premier mode de réalisation d'un dispositif de balayage optique selon l'invention ;
[Fig.6]
   La [Fig.6] montre une variante du premier mode de réalisation ;
[Fig.7a]
[Fig.7b]

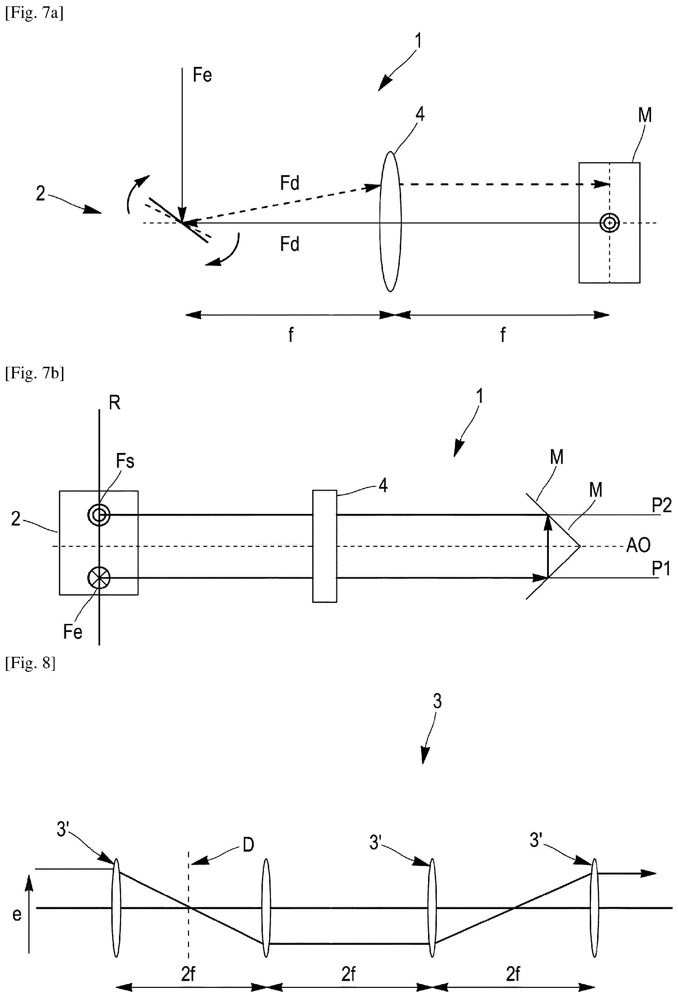

   Les figures 7a et 7b montrent, en vue latérale et en vue de dessus, un deuxième mode de réalisation d'un dispositif de balayage 1 ;
[Fig.8]
   La [Fig.8] montre une pièce permettant de réaliser un dispositif de balayage 1 qui assure un filtrage spectral accordable et rapide d'un faisceau d'entrée.

### DESCRIPTION DETAILLEE DE L'INVENTION

Les figures 1a et 1b illustrent les principes d'un dispositif optique 1 de balayage d'un faisceau lumineux selon l'invention. Ce dispositif 1 est formé d'un mécanisme de balayage permettant de positionner rapidement et précisément un faisceau lumineux, dit "faisceau de balayage", sur une surface d'une pièce 3 disposée à l'intérieur du dispositif. Cette pièce 3 peut être transparente ou réfléchissante au faisceau de balayage, mais dans tous les cas, que ce faisceau soit transmis ou réfléchi, il est transformé par la pièce 3 par exemple dans sa forme, dans son contenu spectral, sa phase, sa polarisation ou dans tout autre paramètre la définissant.

Comme on peut le voir sur les figures 1a, 1b, le dispositif 1 comprend un déflecteur 2 ayant un axe de pivotement R et produisant un faisceau dévié Fd selon un angle de déviation a choisi. Lorsque l'angle de déviation a du faisceau Fd est limité, par exemple à une plage de +/- 15°, le faisceau dévié Fd reste contenu dans un premier plan principal P1. Le déflecteur 2 peut être commandé au moyen d'un système de commande non représenté, par exemple d'un dispositif électronique ou informatique, ce système de commande étant apte à fournir une commande déterminant cet angle de déviation a du faisceau dévié Fd dans le premier plan principal P1.

Le déflecteur 2 peut être mis en œuvre par une grande variété de mécanismes bien connus de l'homme du métier. Par exemple, il peut s'agir d'un miroir oscillant ([Fig.2a] ), d'un miroir polygonal tournant ([Fig.2b]), d'un miroir tournant ([Fig.2c]). Dans ces configurations, un faisceau lumineux d'entrée Fe est réfléchi par une surface réfléchissante du déflecteur 2, cette surface réfléchissante mobile pouvant tourner autour de son axe de pivotement R au moyen du système de commande auquel le déflecteur est relié, pour produire le faisceau dévié Fd. Dans un autre mode de réalisation, le déflecteur peut être mis en œuvre comme un déflecteur électro-optique ou comme un déflecteur à cristaux liquides.

Le faisceau lumineux d'entrée Fe peut être produit par une source lumineuse S, par exemple une source laser. La source laser peut être de n'importe quel type approprié comme, par exemple, un laser à onde continue, un laser pulsé, un laser à longueur d'onde accordable. De préférence, la source lumineuse S fournit un faisceau lumineux d'entrée collimaté Fe. Cette source lumineuse S peut être un composant du dispositif optique de balayage 1 ou un élément externe. Cette source lumineuse est immobile, c'est-à-dire que le faisceau d'entrée Fe est produit dans une position et une orientation fixes par rapport au dispositif optique 1.

Lorsque le dispositif 1 est utilisé pour modifier la forme d'un faisceau, le faisceau d'entrée Fe a une forme donnée, par exemple une forme gaussienne, qui est ensuite transformée en une autre forme de manière contrôlée.

Plus généralement, les caractéristiques de la source lumineuse S et du faisceau d'entrée Fe peuvent être choisies librement en fonction du domaine d'application prévu.

En revenant à la description du schéma des figures 1a et 1b, le déflecteur 2 reçoit également un faisceau transformé Ft, correspondant au faisceau dévié Fd après sa propagation dans le dispositif 1. Dans le dispositif optique 1 représenté, le faisceau transformé Ft se propage et reste contenu dans un deuxième plan principal P2, différent du premier plan principal, lorsque l'angle de déviation a du faisceau dévié Fd est limité, par exemple à une plage de +/-15°. Les deux plans principaux P1, P2 sont disposés, l'un par rapport à l'autre, selon un angle de plan principal b, typiquement compris entre 0° et 120°, bien qu'une autre valeur soit possible. Des valeurs plus faibles de l'angle de plan principal b , par exemple inférieures à 45°, permettent également de confiner le faisceau dévié Fd et le faisceau transformé Ft dans, respectivement, le premier plan principal P1 et le second plan principal P2.

Le déflecteur 2 reçoit ainsi le faisceau transformé Ft et produit un faisceau de sortie Fs du dispositif 1, par exemple par réflexion du faisceau transformé Ft sur la surface réfléchissante mobile du déflecteur 2 lorsque ce dernier est mis en œuvre selon l'un des mécanismes illustrés aux figures 2a, 2b ou 2c.

Comme cela apparaîtra à la fin de la présente description, le faisceau de sortie Fs du dispositif 1 a une position et une orientation fixes par rapport au dispositif optique 1, malgré les mouvements du faisceau dévié Fd, du faisceau de balayage Fb et du faisceau transformé Ft. Dans le contexte de la présente description, par "fixe", on entend que le centre de masse de la distribution d'intensité du faisceau de sortie est maintenu en fonctionnement dans une zone qui est de la taille de la tache du faisceau. Le fait que les faisceaux lumineux se propageant dans le dispositif optique 1 passent deux fois par le même déflecteur 2, permet de « descanner » le faisceau de l'angle de déviation imprimé par le déflecteur 2, de manière à maintenir fixe le faisceau de sortie.

De plus, le premier plan principal P1 et le second plan principal P2 étant distincts, le faisceau d'entrée Fe et le faisceau de sortie Fs sont spatialement séparés. Plus précisément, il existe un plan, intersectant les deux faisceaux, dans lequel les intensités des deux faisceaux sont séparées dans l'espace. Le faisceau de sortie Fs peut être collecté par des éléments optiques appropriés sans perturber le faisceau d'entrée Fe. Il n'est donc pas nécessaire de contrôler la polarisation du faisceau d'entrée Fe, ni de modifier sa polarisation lors de la propagation des faisceaux dans le dispositif 1 pour séparer spatialement le faisceau de sortie Fs du faisceau d'entrée Fe. Cette caractéristique est particulièrement intéressante lorsque le dispositif 1 est utilisé dans un système laser de forte puissance, la polarisation d'une telle source n'étant pas généralement définie ni stable dans le temps.

Dans la continuité de la description du schéma des figures 1a et 1b, un dispositif de balayage 1 conforme à l'invention comprend également une première optique de focalisation 4a pour recevoir le faisceau dévié Fd, et produire le faisceau de balayage Fb, c'est-à-dire le faisceau qui sera projeté sur la pièce 3. Cette première optique de focalisation 4a est donc disposée optiquement entre le déflecteur 2 et la pièce 3 (c'est-à-dire sur le trajet de propagation du faisceau). Dans les schémas des figures 1a et 1b, l'axe optique AOa de la première optique de focalisation 4a est contenu dans le premier plan principal P1 de propagation du faisceau dévié, mais plus généralement, l'axe optique AOa est parallèle à ce premier plan principal P1.

La première optique de focalisation 4a présente une première distance focale fa. Avantageusement, la première optique de focalisation 4a est disposée dans le dispositif 1 de manière à être séparée de l'axe de pivotement R du déflecteur 2 d'une distance, mesurée selon l'axe optique AOa, égale à cette première distance focale fa. En d'autres termes, le faisceau dévié Fd semble provenir du foyer de la première optique de focalisation 4a, de sorte que les faisceaux de balayage Fb produits pour différents angles de déviation a sont parallèles entre eux.

De même, un dispositif de balayage 1 conforme à l'invention comprend une deuxième optique de focalisation 4b pour recevoir le faisceau de balayage Fb, et produire le faisceau transformé Ft. Cette deuxième optique de focalisation 4b est disposée optiquement entre la pièce 3 et le déflecteur 2. Dans les schémas des figures 1a et 1b, l'axe optique AOb de la deuxième optique de focalisation 4b est contenu dans le deuxième plan principal P2 de propagation du faisceau dévié, mais plus généralement, cet axe optique AOb est parallèle à ce deuxième plan principal P2.

La seconde optique de focalisation 4b a une seconde longueur focale fb identique à la première longueur focale fa de la première optique de focalisation 4a. Par "longueur focale identique", on entend dans le cadre de la présente divulgation que les deux longueurs focales peuvent différer au maximum de 10%. Avantageusement, la deuxième optique de focalisation 4b est disposée dans le dispositif 1 de manière à être séparée de l'axe de pivotement R du déflecteur 2 d'une distance, mesurée selon l'axe optique AOb de la deuxième partie optique 4b, égale à cette deuxième distance focale fb. Par conséquent, les faisceaux de balayage Fb se projetant parallèlement à l'axe optique AOb sur la deuxième partie optique 4b seront guidés vers le foyer de cette deuxième partie optique, situé au niveau de l'axe de pivotement du déflecteur 2.

Dans certains modes de réalisation, le réflecteur 2, la première optique de focalisation 4a et la seconde 4b sont disposés de telle sorte que les foyers disposés du côté du déflecteur 2 des deux optiques de focalisation 4a, 4b coïncident. Dans d'autres modes de réalisation, les deux foyers sont séparés dans l'espace.

La première optique de focalisation 4a et la seconde optique de focalisation 4b peuvent prendre toute forme appropriée. En particulier, il peut s'agir de pièces optiques fonctionnant en réflexion ou en transmission. Plusieurs exemples seront donnés dans les différents modes de réalisation exposés dans une section ultérieure de la présente description.

Il est donc envisagé que le faisceau de balayage Fb se propage dans le dispositif de balayage 1, en fonction de l'angle de déviation a, le long de chemins optiques parallèles entre eux et ayant une élévation e qui varie avec l'angle de déviation a. En d'autres termes, les faisceaux de balayage Fb produits pour deux angles de déviation a différents sont parallèles entre eux.

La pièce 3 est disposée dans le dispositif optique 1 de manière à ce que sa surface intercepte le faisceau de balayage Fb. Par conséquent, en contrôlant l'angle de déviation a du faisceau dévié Fd, on contrôle l'élévation e du faisceau de balayage Fb, et donc la position sur la surface de la pièce 3 sur laquelle ce faisceau sera projeté.

Pour simplifier l'expression, le faisceau se propageant de la première optique de focalisation 4a à la seconde optique de focalisation 4b est appelé "faisceau de balayage", et le faisceau se propageant de la seconde optique de focalisation 4b est appelé "faisceau transformé". Mais à proprement parler, le faisceau de balayage Fb modifié par la pièce 3 est transformé par rapport au faisceau de balayage incident sur cette pièce 3.

Pour permettre la propagation du faisceau de balayage Fb entre la première optique de focalisation 4a et la deuxième optique de focalisation 4b, via la pièce 3, le dispositif de balayage 1 comprend au moins une optique réfléchissante M disposée dans le dispositif 1 pour guider le faisceau de balayage Fb. Dans le schéma de la [Fig.1a], deux optiques réfléchissantes M sont ainsi prévues. Avantageusement, ces optiques réfléchissantes M sont disposées de manière à ce que la longueur optique entre la première optique de focalisation 4a et la deuxième optique de focalisation 4b soit égale à la somme de la première distance focale fa et de la deuxième distance focale fb. Ceci permet de garantir que les faisceaux se propageant dans le dispositif 1, et notamment le faisceau transformé Ft, sont correctement collimatés.

Il convient de noter que les distances séparant les différents éléments les uns des autres qui ont été avantageusement présentées ci-dessus ne sont pas impératives. Par exemple, il n'est pas nécessaire que la première optique de focalisation 4a et/ou la deuxième optique de focalisation 4b soient respectivement séparées du déflecteur 2 par précisément leur distance focale fa,fb, bien qu'il soit préférable de maintenir cette distance de séparation dans la limite de +/-10% de la distance focale, et de préférence en dessous de +/-5%.

Dans le mode de réalisation représenté sur la [Fig.1a], l'axe de pivotement du déflecteur correspond à l'axe de pivotement du faisceau dévié Fd. Dans d'autres modes de réalisation, les deux axes de pivotement peuvent être différents et séparés l'un de l'autre. Ceci est acceptable dans la mesure où cette distance de séparation ne dépasse pas les 10% de la distance focale mentionnés ci-dessus. Si toutefois un tel cas se présente, il serait alors préférable de positionner l'optique de focalisation par rapport à l'axe de pivotement du faisceau dévié Fd plutôt que par rapport au déflecteur 2.

Il n'est pas non plus nécessaire que la première optique de focalisation 4a et la seconde optique de focalisation 4b soient optiquement séparées d'une distance égale à la somme de leurs distances focales fa,fb, et cette distance peut généralement être comprise, pour une pure contrainte mécanique du dispositif optique, entre la moitié de la distance focale moyenne (fa+fb)/2 et entre quatre fois cette distance focale moyenne. Des écarts par rapport à l'agencement préféré selon lequel la première optique de focalisation 4a et la deuxième optique de focalisation 4b sont optiquement séparées par la somme de leurs longueurs focales fa,fb, conduisent à la formation d'un faisceau de sortie Fs qui n'est pas parfaitement collimaté, et en particulier à la formation d'un faisceau de sortie qui peut être divergent ou convergent. Cette divergence peut être corrigée par un système optique dédié, bien connu de l'homme du métier, disposé par rapport au déflecteur 2 pour recevoir le faisceau de sortie Fs. Ces divergences ne modifient pas la position et l'orientation du faisceau de sortie Fs, ce qui rendrait l'exploitation de ce faisceau beaucoup plus complexe.

Enfin, le parallélisme entre l'axe optique AOa, AOb et le plan de référence P1, P2 doit être de préférence maintenu dans une fourchette de +/- 20° pour limiter les aberrations optiques. Par conséquent, le terme " parallèle " dans le contexte de la présente divulgation doit être compris comme parallèle dans cette précision de +/- 20°.

Lorsque le faisceau d'entrée Fe est collimaté, le faisceau de balayage Fb tend à converger et à placer son foyer au milieu des deux optiques de focalisation 4a, 4b, puis diverge et est à nouveau collimaté après la deuxième optique de focalisation 4b.

La pièce 3 peut être placée à n'importe quelle position sur le chemin optique entre la première optique de focalisation 4a et la seconde optique de focalisation 4b. En particulier, elle peut être placée contre, ou intégrée dans, l'une des optiques de réflexion M ou l'une des optiques de focalisation 4a, 4b.

Lorsque le faisceau présente une puissance importante, il est préférable de placer la pièce 3 en dehors d'une zone de focalisation du faisceau. La zone de focalisation est distante d'une distance focale fa le long du chemin optique de la première partie optique de focalisation 4a. En effet, la densité d'énergie présente dans la zone de focalisation peut être importante et pourrait dans certains cas endommager la pièce 3. Cette configuration est donc particulièrement avantageuse car elle permet de positionner le point de focalisation dans l'air ou dans le vide (selon la situation de fonctionnement réelle du dispositif optique 1) à distance de tous les composants optiques du dispositif optique 1, ce qui favorise la gestion thermique de ce dispositif.

Comme déjà indiqué, la pièce 3 peut être configurée pour modifier la forme du faisceau de sortie Fs en fonction de l'angle a choisi du faisceau dévié Fd. En variante, la pièce 3 peut constituer un corps d'inspection. Dans tous les cas, le faisceau de balayage Fb est transformé par son interaction, en réflexion ou en transmission, avec cette pièce 3.

Comme indiqué dans l'introduction de la présente demande, la possibilité de modifier la forme du faisceau de sortie Fs est particulièrement utile dans les applications d'usinage laser, de perçage, de découpe de précision et de traitement de surface des matériaux. Dans ces applications, le faisceau de sortie peut être, par exemple :
- un faisceau à sommet plat carrée ou rectangulaire;
- un faisceau à sommet plat circulaire ;
- un faisceau à sommet plat de forme linéaire (produit d'un sommet plat dans une première direction et d'une gaussienne dans une direction perpendiculaire à la première) ;
- un faisceau en forme d'anneau ;
- un faisceau à deux formes, par exemple une combinaison d'un point et d'un anneau ou la combinaison d'un point et d'un "C".

Pour réaliser la transformation de forme du faisceau de balayage Fb, la pièce 3 peut présenter un motif de diffraction, le faisceau de balayage interceptant ce motif pour modifier sa forme. En d'autres termes, la pièce 3 peut comprendre un élément optique diffractif ("DOE"). Le motif de diffraction varie avec l'élévation e, et ainsi un faisceau de balayage Fb ayant une première élévation (correspondant à un faisceau dévié ayant un premier angle de déviation) interceptera un motif différent d'un faisceau de balayage Fb ayant une seconde élévation, différente de la première (et correspondant à un faisceau dévié ayant un second angle de déviation différent du premier). Ce motif de diffraction peut varier de manière continue (comme présenté sur la [Fig.4b]), et dans ce cas une faible variation de l'angle de déflexion a conduit à un changement progressif de la forme du faisceau de sortie Fs, ou discontinue (comme présenté sur la [Fig.4c]), et dans ce cas on peut alterner très rapidement (pour une faible variation de l'angle de déflexion) entre deux formes distinctes.

Dans cette application de mise en forme de faisceau, on peut également envisager de former la pièce 3 comme une pluralité de plaques de phase, la phase communiquée au faisceau de balayage Fb variant avec l'élévation e de ce faisceau (c'est-à-dire avec l'angle de déviation). De telles plaques de phase peuvent facilement être intégrées dans une pluralité d'optiques réfléchissantes M ou d'optiques de focalisation 4a, 4b, comme mentionné précédemment. La ou les plaques de phase peuvent être microstructurées, c'est-à-dire présenter des " pixels " dont les dimensions sont typiquement comprises entre quelques microns ou moins et quelques centaines de microns. Chaque pixel présente une élévation, par rapport à un plan moyen de la plaque, d'au plus quelques microns ou d'au plus quelques centaines de microns. Lorsque plusieurs plaques de phase sont prévues, elles peuvent être disposées optiquement en série, comme le montre la [Fig.4a].

Pour modifier la forme du faisceau de balayage, la pièce 3 peut également comprendre au moins une optique de forme libre, dont des illustrations sont présentées sur les figures 3. Par "optique de forme libre", on entend dans la présente divulgation un élément optique, transmissif ou réfléchissant, dont les surfaces ne sont pas parfaitement sphériques ou planes. Par exemple, il peut s'agir :
- un élément optique sphérique hors axe, comme indiqué sur la figure 3a ;
- un élément optique asphérique tel que représenté sur les figures 3b ("sur l'axe") et 3c ("hors de l'axe"), qui présente une symétrie de rotation autour d'un axe perpendiculaire à son plan moyen ;
- un élément optique qui n'est pas symétrique en rotation ou en translation autour d'un axe perpendiculaire à son plan moyen, comme le montre la figure 3d.

Dans certains modes de réalisation, la pièce 3 peut comprendre une pluralité de pièces optiques disposées optiquement en série et formant un ensemble optique combinant des pièces optiques de toute nature (forme libre ou non, plaques de phase, éléments optiques diffractifs...).

Dans le cas particulier où l'ensemble optique est composé d'optiques de forme libre, un nombre réduit de telles pièces, de 1 à 5, permet de conformer un faisceau lumineux en une grande variété de formes de faisceau, notamment celles présentées ci-dessus, en fonction de l'élévation e dans laquelle le faisceau de balayage Fb se propage dans l'ensemble optique 3.

### Première variante

Les figures 5a (vue de dessus) et 5b (vue de côté du déflecteur 2) représentent un premier mode de réalisation d'un dispositif optique de balayage 1 mettant en œuvre les principes qui viennent d'être exposés. Dans ce premier mode de réalisation, le déflecteur 2 est réalisé par un miroir oscillant de type galvanométrique ayant un seul axe de pivotement R (correspondant à l'axe de pivotement du faisceau dévié Fd). Le faisceau d'entrée Fe et le faisceau Fd dévié par le miroir déflecteur se propagent dans le premier plan principal P1 qui est incliné par rapport à l'axe de pivotement R, c'est-à-dire que cet axe R n'est pas perpendiculaire au premier plan principal P1.

Le faisceau d'entrée est projeté sur la surface réfléchissante du miroir au niveau de l'axe de pivotement R. Le faisceau transformé Ft se projette également sur cette surface réfléchissante dans la zone de projection du faisceau d'entrée Fe au niveau de l'axe de pivotement R. Il en résulte que le faisceau dévié Fd et le faisceau transformé Ft se superposent sur le miroir 2 au niveau de l'axe de pivotement R. Il convient de préciser que cette caractéristique n'est pas obligatoire, et que plus généralement le faisceau dévié et le faisceau transformé doivent de préférence croiser l'axe de pivotement, mais peuvent se superposer en dehors du miroir 2.

Le faisceau transformé Ft et le faisceau de sortie se propagent dans le deuxième plan principal P2, qui est également incliné par rapport à l'axe de pivotement R. Les deux plans principaux P1, P2 ne sont pas parallèles entre eux et, dans le mode de réalisation représenté sur la figure, se coupent au niveau de l'axe de pivotement R du déflecteur 2, ici le miroir oscillant. De cette manière, il est possible de séparer spatialement le faisceau d'entrée Fe et le faisceau de sortie Fs. Le faisceau de sortie Fs du dispositif 1 a une position et une orientation fixes par rapport au dispositif optique 1, quelle que soit l'orientation du déflecteur 2.

Les première et deuxième optiques de focalisation 4a, 4b sont constituées de miroirs paraboliques désaxés. Les axes optiques de ces deux optiques sont respectivement disposés dans le premier plan principal P1 et dans le second plan principal P2. Dans la configuration représentée, le foyer de ces deux optiques de focalisation 4a, 4b est disposé sur l'axe de pivotement R du déflecteur 2. Elles ont la même distance focale.

Le faisceau de balayage Fb varie en élévation avec l'angle de déviation a du faisceau dévié Fd. Les faisceaux de balayage Fb produits pour deux angles de déviation a différents sont parallèles entre eux. La surface de réflexion du second miroir parabolique hors axe est pourvue d'un motif de diffraction variable, permettant de modifier la forme du faisceau de balayage Fb en fonction de son élévation, comme discuté en détail dans les paragraphes précédents.

Le dispositif de balayage 1 de cette réalisation comprend également deux optiques de réflexion M formées par des miroirs simples plans et fixes. Ces miroirs sont disposés dans le dispositif pour guider le faisceau de balayage Fb depuis le premier miroir parabolique hors axe 4a vers le second miroir parabolique hors axe 4b. Plus précisément, ces miroirs M sont disposés de telle sorte que la distance optique séparant les deux optiques de focalisation 4a, 4b corresponde à deux fois la distance focale f de ces pièces.

On comprend que dans ce mode de réalisation, la variation contrôlée de l'angle de déflexion a permet de projeter le faisceau de balayage Fb sur des zones sélectionnées de la figure de diffraction formée sur le deuxième miroir parabolique 4b. De cette manière, il est possible de produire un faisceau transformé Ft et un faisceau de sortie Fs de formes variables et sélectionnées. En outre, le faisceau de sortie Fs du dispositif 1 a une position et une orientation fixes par rapport au dispositif optique 1, quelle que soit l'orientation du déflecteur 2.

Comme indiqué précédemment, il n'est pas nécessaire que les distances entre les différentes parties optiques du dispositif 1 soient précisément telles que représentées. Cette disposition géométrique précise présente l'avantage de préserver la bonne collimation du faisceau de sortie Fs. Si elle n'est pas respectée, il est possible d'équiper le dispositif de balayage 1 d'un système optique permettant de la corriger.

La [Fig.6] représente une variante du premier mode de réalisation dans laquelle la disposition géométrique précise n'est pas respectée. Le dispositif de balayage 1 de cette variante ne comprend qu'une seule optique réfléchissante M, également formée par un miroir plan et fixe.

Les deux miroirs paraboliques désaxés 4a, 4b sont convenablement disposés pour placer leur foyer respectif sur l'axe de pivotement R du déflecteur 2, tout comme dans le cas des figures 5a, 5b. Le miroir M est disposé dans le dispositif 1 pour guider le faisceau de balayage Fb du premier miroir parabolique hors axe 4a vers le second miroir parabolique hors axe 4b. Ce miroir M ne pouvant être placé au niveau de l'axe de pivotement R, la distance optique entre les deux miroirs paraboliques 4a,4b est différente de deux fois leur distance focale, inférieure à deux fois leur distance focale dans l'exemple représenté.

### Deuxième variante

Les figures 7a, 7b montrent une vue latérale et une vue de dessus d'un deuxième mode de réalisation d'un dispositif de balayage 1. Dans ce mode de réalisation, le premier plan principal P1 et le deuxième plan principal P2 sont parallèles (et distincts) l'un de l'autre. Ces deux plans principaux sont également perpendiculaires à l'axe de pivotement R du déflecteur 2, ici un miroir oscillant. Par conséquent, le faisceau dévié Fd et le faisceau transformé Ft ne se chevauchent pas sur le déflecteur 2, bien qu'ils se projettent tous deux sur l'axe de pivotement R. Le faisceau d'entrée Fe et le faisceau de sortie Fs sont séparés spatialement l'un de l'autre. Le faisceau de sortie Fs du dispositif 1 a une position et une orientation fixes par rapport au dispositif optique, quelle que soit l'orientation du déflecteur 2.

Dans le dispositif de balayage 1 de ce mode de réalisation, une seule optique de focalisation 4 combine les fonctions de la première optique de focalisation 4a et de la deuxième optique de focalisation 4b. Dans cette configuration, l'axe optique AO de l'optique unique de focalisation 4 est compris entre le premier plan principal P1 et le second plan principal P2. Cette optique unique de focalisation 4 est ici constituée d'une lentille cylindrique, l'axe du cylindre étant perpendiculaire aux premier et deuxième plans principaux P1, P2.

L'optique réfléchissante M est formée d'un coin réfléchissant pour guider le faisceau de balayage Fb contenu dans le premier plan principal P1 afin qu'il se propage en retour dans le deuxième plan principal P2. Ce coin réfléchissant est formé par deux miroirs, permettant de réaliser ce guidage après deux réflexions.

La disposition géométrique préférée de cet ensemble est telle que les foyers de l'optique réfléchissante unique 4 sont respectivement disposés sur l'axe de pivotement R du déflecteur 2 et entre les deux surfaces réfléchissantes du coin M. La pièce 3 peut être disposée à proximité du coin réfléchissant M, par exemple sur l'une de ses surfaces réfléchissantes ou entre ses deux surfaces réfléchissantes.

Dans ce mode de réalisation également, la variation contrôlée de l'angle de déflexion a permet de projeter le faisceau de balayage Fb sur des zones sélectionnées de la pièce 3, et il est ainsi possible de produire un faisceau transformé Ft et un faisceau de sortie Fs de formes variables et sélectionnées, tout en maintenant fixes la position et l'orientation de ce faisceau de sortie Fs, par rapport au dispositif optique.

Il convient de mentionner que dans cette réalisation, les deux miroirs sont proches du foyer du faisceau de balayage Fb, précisément situés entre eux, de sorte que cette configuration est utilisée de préférence pour des faisceaux de puissance relativement faible. La pièce à usiner 3 peut être placée n'importe où après la lentille cylindrique avant qu'elle ne repasse devant la lentille.

### Exemple de mise en œuvre

La [Fig.8] illustre l'utilisation d'un dispositif de balayage selon l'invention en dehors du domaine de la mise en forme du faisceau. Plus précisément, la [Fig.8] montre une pièce 3 permettant un filtrage spectral rapidement accordable du faisceau d'entrée.

Cette pièce 3 peut être placée dans un dispositif de balayage 1 selon l'un quelconque des modes de réalisation précédemment décrits. Cette pièce 3 comprend un système de lentilles 3' identiques séparées par deux fois leur distance focale f'. Le déplacement en hauteur e du faisceau de balayage Fb est converti en un déplacement angulaire entre les deux lentilles successives 3'. En un point central du système 3, on a placé un réseau diffractif D qui agit comme un filtre de longueur d'onde. Le faisceau de balayage Fb en sortie de la pièce 3 (et donc le faisceau transformé Ft et le faisceau de sortie Fs du dispositif 1) présentera donc une longueur d'onde choisie en fonction de l'angle de déviation a défini par le déflecteur 2.

Bien entendu, l'invention n'est pas limitée aux modes de réalisation décrits et des variantes peuvent être réalisées sans sortir du cadre de l'invention tel que défini par les revendications.

## Revendications

1. Dispositif optique (1) pour balayer un faisceau lumineux, appelé "faisceau de balayage (Fb)", sur une surface d'une pièce (3) à balayer, disposée dans le dispositif, le faisceau lumineux réfléchi ou transmis par la pièce à balayer, appelé "faisceau transformé (Ft)", étant guidé vers une position fixe et selon une orientation fixe par rapport au dispositif optique et définissant un faisceau lumineux appelé "faisceau de sortie (Fs)" du dispositif, le dispositif comprenant :
- un déflecteur (2) ayant un axe de pivotement (R) et configuré pour produire un faisceau dévié (Fd) selon un angle choisi (a), le faisceau dévié (Fd) restant contenu dans un premier plan principal (P1), le déflecteur (2) recevant également le faisceau transformé (Ft), le faisceau transformé (Ft) restant contenu dans un deuxième plan principal (P2), différent du premier plan principal (P1), pour produire le faisceau de sortie (Fs) ;
- une première optique de focalisation (4a ; 4) ayant un premier axe optique (AOa ; AO) parallèle au premier plan principal (P1), la première optique de focalisation (4a ; 4) étant optiquement disposée entre le déflecteur (2) et la pièce (3), recevant le faisceau dévié (Fd) et produisant le faisceau de balayage (Fb) ;
- au moins une optique réfléchissante (M) disposée dans le dispositif optique (1) pour guider le faisceau de balayage (Fb) de la première optique de focalisation (4a ; 4) à la seconde optique de focalisation (4b; 4);
**caractérise en ce que** le dispositif comprenant une seconde optique de focalisation (4b ; 4) ayant un second axe optique (AOb ; AO) parallèle au second plan principal (P2), la seconde optique de focalisation (4b ; 4) étant optiquement disposée entre la pièce (3) et le déflecteur (2).

2. Dispositif optique (1) selon la revendication précédente, dans lequel la première optique de focalisation (4a ; 4) présente une première longueur focale (fa) et la seconde optique de focalisation (4b ; 4) présente une seconde longueur focale (fb) identique à la première longueur focale (fa).

3. Dispositif optique (1) selon la revendication précédente, dans lequel la première optique de focalisation (4a,4) et la deuxième optique de focalisation (4b;4) sont séparées de l'axe de pivotement (R) du déflecteur (2) par une distance, mesurée le long de leurs axes optiques (AOa, AOb), comprise entre +/-10% de leur longueur focale (fa,fb), de préférence entre +/-5% de leur longueur focale (fa,fb).

4. Dispositif optique (1) selon l'une quelconque des revendications précédentes, dans lequel le déflecteur (2) est commandé pour limiter l'angle de déviation (a) à une plage de +/- 25°.

5. Dispositif optique (1) selon l'une quelconque des revendications précédentes, dans lequel la longueur optique entre la première optique de focalisation (4a ; 4) et la deuxième optique de focalisation (4b ; 4) est comprise entre la moitié de la moyenne de la première longueur focale (fa) et de la deuxième longueur focale (fb) et entre quatre fois la moyenne de la première longueur focale (fa) et de la deuxième longueur focale (fb).

6. Dispositif optique (1) selon l'une quelconque des revendications précédentes dans lequel le déflecteur (2) consiste en un dispositif choisi dans la liste formée par : un miroir oscillant, un miroir polygonal tournant, un miroir tournant, un déflecteur électro-optique ou en un déflecteur à cristaux liquides.

7. Dispositif optique (1) selon l'une quelconque des revendications précédentes dans lequel le premier plan principal (P1) et le deuxième plan principal (P2) ne sont pas parallèles entre eux et le faisceau dévié (Fd) et le faisceau transformé (Ft) se chevauchent sur le déflecteur (2).

8. Dispositif optique (1) selon l'une quelconque des revendications précédentes dans lequel la première optique de focalisation (4a) et la deuxième optique de focalisation (4b) sont formées de miroirs paraboliques hors axe.

9. Dispositif optique (1) selon l'une quelconque des revendications précédentes dans lequel l'au moins une optique réfléchissante (M) est formée d'un miroir plan et fixe.

10. Dispositif optique (1) selon l'une quelconque des revendications 1 à 6 dans lequel :
- le premier plan principal (P1) et le second plan principal (P2) sont parallèles l'un à l'autre ;
- la première optique de focalisation et la seconde optique de focalisation sont constituées par une seule partie d'optique de focalisation (4) ;
- la pièce optique réfléchissante (M) est formée par un coin réfléchissant pour guider le faisceau de balayage (Fb) contenu dans le premier plan principal (P1) pour qu'il se propage dans le second plan principal (P2).

11. Dispositif optique (1) selon les revendications précédentes dans lequel l'optique de focalisation unique (4) est constituée d'une lentille cylindrique.

12. Dispositif optique (1) selon l'une quelconque des revendications précédentes, dans lequel la pièce (3) est configurée pour modifier la forme du faisceau de sortie (Fs) en fonction de l'angle de déviation (a) du faisceau dévié (Fd).

13. Dispositif optique (1) selon la revendication précédente dans lequel la pièce (3) présente un motif de diffraction.

14. Dispositif optique (1) selon la revendication précédente dans lequel le motif de diffraction varie de manière continue ou discontinue.

15. Dispositif optique (1) selon la revendication 12, dans lequel la pièce (3) comprend une pluralité de plaques de phase.

16. Dispositif optique (1) selon la revendication 12, dans lequel la pièce (3) comprend une pièce optique de forme libre.

## Patentansprüche

1. Optische Vorrichtung (1) zum Abtasten eines Lichtstrahls, genannt "Strahl für die Abtastung (Fb)", auf einer Oberfläche eines abzutastenden Werkstücks (3), das in der Vorrichtung angeordnet ist, wobei der Lichtstrahl, der durch das abzutastende Werkstück reflektiert oder übertragen wird, genannt "transformierter Strahl (Ft)", zu einer festen Position und gemäß einer festen Ausrichtung bezüglich der optischen Vorrichtung geleitet wird und einen Lichtstrahl, genannt "Ausgangsstrahl (Fs)" der Vorrichtung, definiert, wobei die Vorrichtung umfasst:
- einen Deflektor (2), der eine Schwenkachse (R) vorweist, der zum Erzeugen eines abgelenkten Strahls (Fd) gemäß einem gewählten Winkel (a) konfiguriert ist, wobei der abgelenkte Strahl (Fd) in einer ersten Hauptebene (P1) enthalten bleibt, der Deflektor (2) auch den transformierten Strahl (Ft) empfängt, der transformierte Strahl (Ft) in einer zweiten Hauptebene (P2), die sich von der ersten Hauptebene (P1) unterscheidet, enthalten bleibt, zum Erzeugen des Ausgangsstrahls (Fs);
- eine erste Fokussieroptik (4a; 4), die ein erste optischen Achse (AOa; AO) parallel zu der ersten Hauptebene (P1) vorweist, wobei die erste Fokussieroptik (4a; 4), die zwischen dem Deflektor (2) und dem Werkstück (3) optisch angeordnet ist, den abgelenkten Strahl (Fd) empfängt und den Strahl für die Abtastung (Fb) erzeugt;
- mindestens eine reflektierende Optik (M), die in der optischen Vorrichtung (1) zum Leiten des Strahls für die Abtastung (Fb) von der ersten Fokussierungsoptik (4a; 4) zu der zweiten Fokussierungsoptik (4b; 4) angeordnet ist;
**dadurch gekennzeichnet, dass** die Vorrichtung eine zweite Fokussieroptik (4b; 4), die eine zweite optische Achse (AOb; AO) parallel zu der zweiten Hauptebene (P2) vorweist, umfasst, wobei die zweite Fokussieroptik (4b; 4) zwischen dem Werkstück (3) und dem Deflektor (2) optisch angeordnet ist.

2. Optische Vorrichtung (1) nach dem vorstehenden Anspruch, wobei die erste Fokussieroptik (4a; 4) eine erste Brennweite (fa) aufweist und die zweite Fokussieroptik (4b; 4) eine zweite Brennweite (fb) aufweist, die mit der ersten Brennweite (fa) identisch ist.

3. Optische Vorrichtung (1) nach dem vorstehenden Anspruch, wobei die erste Fokussieroptik (4a, 4) und die zweite Fokussieroptik (4b; 4) von der Schwenkachse (R) des Deflektors (2) um einen Abstand getrennt sind, der entlang ihrer optischen Achsen (AOa, AOb) gemessen zwischen +/-10 % ihrer Brennweite (fa, fb), vorzugsweise zwischen +/-5 % ihrer Brennweite (fa, fb) liegt.

4. Optische Vorrichtung (1) nach einem der vorstehenden Ansprüche, wobei der Deflektor (2) zum Begrenzen des Ablenkwinkels (a) auf einen Bereich von +/- 25° gesteuert wird.

5. Optische Vorrichtung (1) nach einem der vorstehenden Ansprüche, wobei die optische Länge zwischen der ersten Fokussierungsoptik (4a; 4) und der zweiten Fokussierungsoptik (4b; 4) zwischen der Hälfte des Mittelwerts der ersten Brennweite (fa) und der zweiten Brennweite (fb) und dem Vierfachen des Mittelwerts der ersten Brennweite (fa) und der zweiten Brennweite (fb) liegt.

6. Optische Vorrichtung (1) nach einem der vorstehenden Ansprüche, wobei der Deflektor (2) aus einer Vorrichtung besteht, die aus der Liste ausgewählt ist, die ausgebildet ist durch: einen oszillierenden Spiegel, einen rotierenden Polygonspiegel, einen rotierenden Spiegel, einen elektro-optischen Deflektor oder einen Flüssigkristall-Deflektor.

7. Optische Vorrichtung (1) nach einem der vorstehenden Ansprüche, wobei die erste Hauptebene (P1) und die zweite Hauptebene (P2) nicht parallel zueinander sind und der abgelenkte Strahl (Fd) und der transformierte Strahl (Ft) sich auf dem Deflektor (2) überlappen.

8. Optische Vorrichtung (1) nach einem der vorstehenden Ansprüche, wobei die erste Fokussieroptik (4a) und die zweite Fokussieroptik (4b) aus parabolischen außeraxialen Spiegeln ausgebildet sind.

9. Optische Vorrichtung (1) nach einem der vorstehenden Ansprüche, wobei die mindestens eine reflektierende Optik (M) aus einem ebenen und festen Spiegel ausgebildet ist.

10. Optische Vorrichtung (1) nach einem der vorstehenden Ansprüche 1 bis 6, wobei:
- die erste Hauptebene (P1) und die zweite Hauptebene (P2) parallel zueinander sind;
- die erste Fokussieroptik und die zweite Fokussieroptik durch einen einzigen Fokussieroptikteil (4) gebildet sind;
- das reflektierende optische Werkstück (M) durch eine reflektierende Ecke ausgebildet ist, zum Leiten des Strahls für die Abtastung (Fb), der in der ersten Hauptebene (P1) enthalten ist, sodass sich dieser in der zweiten Hauptebene (P2) ausbreitet.

11. Optische Vorrichtung (1) nach den vorstehenden Ansprüchen, wobei die alleinige Fokussieroptik (4) aus einer zylindrischen Linse gebildet ist.

12. Optische Vorrichtung (1) nach einem der vorstehenden Ansprüche, wobei das Werkstück (3) zum Modifizieren der Form des Ausgangsstrahls (Fs) in Abhängigkeit von dem Ablenkwinkel (a) des abgelenkten Strahls (Fd) konfiguriert ist.

13. Optische Vorrichtung (1) nach dem vorstehenden Anspruch, wobei das Werkstück (3) ein Beugungsmuster aufweist.

14. Optische Vorrichtung (1) nach dem vorstehenden Anspruch, wobei das Beugungsmuster auf kontinuierliche oder diskontinuierliche Weise variiert.

15. Optische Vorrichtung (1) nach Anspruch 12, wobei das Werkstück (3) eine Vielzahl von Phasenplatten umfasst.

16. Optische Vorrichtung (1) nach Anspruch 12, wobei das Werkstück (3) ein optisches Freiformwerkstück umfasst.

## Claims

1. An optical device (1) for scanning a light beam, called "scanning beam (Fb)", over a surface of a workpiece (3) to be scanned, disposed in the device, the light beam reflected or transmitted by the workpiece to be scanned, called "transformed beam (Ft)", being guided to a fixed position and in a fixed orientation with respect to the optical device and defining a light beam called "output beam (Fs)" of the device, the device comprising:
- a deflector (2) having a pivot axis (R) and configured to produce a deflected beam (Fd) at a selected angle (a), the deflected beam (Fd) remaining contained in a first principal plane (P1), the deflector (2) also receiving the transformed beam (Ft), the transformed beam (Ft) remaining contained in a second principal plane (P2), different from the first principal plane (P1), to produce the output beam (Fs);
- a first focusing optic (4a; 4) having a first optical axis (AOa; AO) parallel to the first principal plane (P1), the first focusing optic (4a; 4) being optically disposed between the deflector (2) and the workpiece (3), receiving the deflected beam (Fd) and producing the scanning beam (Fb);
- at least one reflective optic (M) disposed in the optical device (1) to guide the scanning beam (Fb) from the first focusing optic (4a; 4) to the second focusing optic (4b; 4);
**characterized in that** the device comprises a second focusing optic (4b; 4) having a second optical axis (AOb; AO) parallel to the second principal plane (P2), the second focusing optic (4b; 4) being optically disposed between the workpiece (3) and the deflector (2).

2. The optical device (1) according to the preceding claim, wherein the first focusing optic (4a; 4) has a first focal length (fa) and the second focusing optic (4b; 4) has a second focal length (fb) identical to the first focal length (fa).

3. The optical device (1) according to the preceding claim, wherein the first focusing optic (4a, 4) and the second focusing optic (4b; 4) are separated from the pivot axis (R) of the deflector (2) by a distance, measured along their optical axes (AOa, AOb), of between +/-10% of their focal length (fa, fb), preferably between +/-5% of their focal length (fa, fb).

4. The optical device (1) according to any of the preceding claims, wherein the deflector (2) is controlled to limit the deflection angle (a) to a range of +/- 25°.

5. The optical device (1) according to any of the preceding claims, wherein the optical length between the first focusing optic (4a; 4) and the second focusing optic (4b; 4) is between half the average of the first focal length (fa) and the second focal length (fb) and between four times the average of the first focal length (fa) and the second focal length (fb).

6. The optical device (1) according to any of the preceding claims, wherein the deflector (2) consists of a device selected from the list formed by: an oscillating mirror, a rotating polygonal mirror, a rotating mirror, an electro-optical deflector or a liquid crystal deflector.

7. The optical device (1) according to any of the preceding claims, wherein the first principal plane (P1) and the second principal plane (P2) are not parallel to each other and the deflected beam (Fd) and the transformed beam (Ft) overlap on the deflector (2).

8. The optical device (1) according to any of the preceding claims wherein the first focusing optic (4a) and the second focusing optic (4b) are formed by off-axis parabolic mirrors.

9. The optical device (1) according to any of the preceding claims, wherein the at least one reflective optic (M) is formed by a plane, fixed mirror.

10. The optical device (1) according to any of claims 1 to 6 wherein:
- the first principal plane (P1) and the second principal plane (P2) are parallel to each other;
- the first focusing optic and the second focusing optic consist of a single focusing optic part (4);
- the reflective optical component (M) is formed by a reflective wedge to guide the scanning beam (Fb) contained in the first principal plane (P1) to propagate in the second principal plane (P2).

11. The optical device (1) according to the preceding claims, wherein the single focusing optic (4) consists of a cylindrical lens.

12. The optical device (1) according to any of the preceding claims, wherein the workpiece (3) is configured to modify the shape of the output beam (Fs) as a function of the deflection angle (a) of the deflected beam (Fd).

13. The optical device (1) according to the preceding claim, wherein the workpiece (3) has a diffraction pattern.

14. The optical device (1) according to the preceding claim, wherein the diffraction pattern varies continuously or discontinuously.

15. The optical device (1) according to claim 12, wherein the workpiece (3) comprises a plurality of phase plates.

16. The optical device (1) according to claim 12, wherein the workpiece (3) comprises a free-form optical component.
